# EUROPÄISCHE PATENTSCHRIFT

(11) **EP 2 995 820 B1**
(45) Veröffentlichungstag und Bekanntmachung des Hinweises auf die Patenterteilung: **09.10.2019**
(21) Anmeldenummer: 15181049.6
(22) Anmeldetag: 14.08.2015
(51) Int. Cl.: F04D 19/04, F04D 25/06, H02K 1/27, H02K 5/12, H02K 7/14

(54) **VAKUUMPUMPE MIT GESCHWEISSTEM MOTORROTOR UND MIT V-FÖRMIG ANGEORDNETEN MAGNETEN**
VACUUM PUMP WITH WELDED MOTOR ROTOR AND WITH MAGNETS ARRANGED IN V-SHAPE
POMPE À VIDE AVEC ROTOR DE MOTEUR SOUDÉ ET AVEC DES AIMANTS AGENCÉS EN FORME DE V

(30) Priorität: 11.09.2014 DE 102014113109
(43) Veröffentlichungstag der Anmeldung: 16.03.2016
(73) Patentinhaber: PFEIFFER VACUUM GMBH, 35614 Asslar (DE)
(72) Erfinder: Bergmann, Dr. Gabriel, 35039 Marburg (DE)
(74) Vertreter: Manitz Finsterwald Patent- und Rechtsanwaltspartnerschaft mbB

(56) Entgegenhaltungen:
- EP-A1- 2 770 616
- EP-A2- 0 817 355
- EP-A2- 1 014 542
- EP-A2- 2 101 395
- EP-A2- 2 355 306
- EP-B1- 1 265 338
- WO-A2-2007/048211
- DE-A1-102005 032 721
- DE-A1-102009 060 170
- DE-A1-102010 062 722
- DE-A1-102012 212 772
- JP-A- H1 118 324
- JP-A- H11 299 152
- US-A1- 2006 022 541
- US-A1- 2009 179 518
- US-A1- 2012 274 168

## Beschreibung

Die vorliegende Erfindung betrifft eine Vakuumpumpe, insbesondere eine Turbomolekularpumpe oder eine Vorvakuumpumpe für eine Turbomolekularpumpe, wie etwa eine Scroll-, Schraubenvakuum-, Membran-, Drehschieber-, Hubkolben- oder Wälzkolbenpumpe, umfassend wenigstens einen Pumpmechanismus zum Pumpen eines Gases durch die Vakuumpumpe und einen, insbesondere als Synchronmotor ausgestalteten, Elektromotor zum Antreiben des Pumpmechanismus, wobei der Elektromotor einen Stator und einen mit dem Stator zusammenwirkenden, um eine Drehachse drehbaren Rotor aufweist, wobei der Rotor einen aus einem Paket von Stahlblechen gebildeten Kern und Permanentmagnete aufweist, die um die Drehachse herum im Inneren des Kerns angeordnet sind.

Eine derartige Vakuumpumpe ist aus der EP 1 265 338 B1 bekannt, die den Oberbegriff des Anspruchs 1 offenbart.

In der JP H11 18324 A ist ein Elektromotor beschrieben, an dessen Rotor Schweißnähte zur Verbindung von Blechlamellen in einer Nut zwischen magnetischen Polen des Rotors angeordnet sind, um Streuflüsse zu reduzieren.

Die JP H11 299152 A beschreibt einen Rotor für einen Elektromotor, bei welchem zwischen Rotorpolen konkave Abschnitte mit einer Schweißnaht vorgesehen sind.

Weiterer Stand der Technik ist aus WO 2007/048211 A2, EP 2 355 306 A2, US 2012/274168 A1, EP 1 014 542 A2, US 2009/179518 A1, EP 2 101 395 A2 und EP 2 770 616 A1 bekannt.

Bei anderen aus dem Stand der Technik bekannten Vakuumpumpen sind auf der Außenseite des Rotors des Elektromotors Permanentmagnete auf der Oberfläche eines magnetischen Rotorrückschlusses durch Kleben befestigt. Bei schnell drehendem Rotor wirken hohe Fliehkräfte auf die Permanentmagnete, so dass es erforderlich sein kann, dass die Permanentmagnete von einer Bandage gehalten werden müssen. Um im Bereich zwischen dem Rotor und dem Stator des Elektromotors Platz für die Bandage zu schaffen, muss ein großer effektiver Luftspalt zwischen dem Rotor und dem Stator vorgesehen werden. Dies kann zu einem höheren Materialbedarf an Permanentmagneten führen und außerdem im Betrieb des Elektromotors höhere Kurzschlussströme verursachen. Außerdem fallen durch die Verwendung der Bandage höhere Fertigungskosten an.

Der vorliegenden Erfindung liegt die Aufgabe zugrunde, eine Vakuumpumpe mit einem einfach und kostengünstig herzustellenden Elektromotor mit verbesserten Eigenschaften bereitzustellen.

Die Aufgabe wird durch eine Vakuumpumpe mit den Merkmalen des Anspruchs 1 gelöst. Bevorzugte Ausführungsformen und Weiterbildungen der Erfindung sind in den abhängigen Ansprüchen beschrieben.

Die Aufgabe wird dadurch gelöst, dass eine Vakuumpumpe der eingangs genannten Art dadurch weitergebildet wird, dass das Paket von Stahlblechen von wenigstens einer Schweißnaht zusammengehalten wird, die an der Außenseite eines Abschnitts des Kerns angeordnet ist, der zwischen zwei in Drehrichtung des Rotors gesehen benachbarten Permanentmagneten liegt.

Im Gegensatz zu der Vakuumpumpe gemäß der eingangs genannten Druckschrift EP 1 265 338 B1 liegt die Schweißnaht somit nicht in radialer Richtung gesehen vor der Mitte einer Magnetpolstirnfläche eines im Kern angeordneten Permanentmagneten, sondern an der Außenseite eines Kernabschnitts, der zwischen zwei benachbarten Permanentmagneten liegt. Durch die Anordnung der Schweißnaht an der Außenseite des zwischen den Permanentmagneten liegenden Kernabschnitts können von der Schweißnaht auf den Magnetfluss der Rotor-Permanentmagnete bewirkte Störungen verringert und im optimalen Fall vermieden werden, wodurch die Betriebseigenschaften des Elektromotors der erfindungsgemäßen Vakuumpumpe verbessert werden.

Der Rotor weist in Umfangsrichtung des Rotors gesehen eine vorgegebene Anzahl an Rotorpolen auf, wobei jeder Rotorpol wenigstens zwei Permanentmagnete umfasst.

Erfindungsgemäß erstreckt sich die Schweißnaht parallel zur Drehachse. Dabei ist die Schweißnaht in einer in dem Paket von Stahlblechen vorgesehenen, parallel zur Drehachse verlaufenden Nut angeordnet. Der den Kern bildende Stapel aus Stahlblechen wird normalerweise dadurch gebildet, dass die Stahlbleche längs der Drehachse gesehen aneinandergereiht bzw. gestapelt sind. Indem die Schweißnaht an der Außenseite des Kerns bzw. des Blechstapels parallel zur Drehachse gezogen wird, können die Bleche somit in optimaler Weise von der Schweißnaht zusammengehalten werden.

Bei dem Stahlblech handelt es sich insbesondere um Elektroblech.

Vorzugsweise ist die Schweißnaht in Drehrichtung des Rotors gesehen in der Mitte des Kernabschnitts auf der Außenseite des Kernabschnitts angeordnet. Die Schweißnaht verläuft somit gewissermaßen mittig zwischen den beiden benachbarten Permanentmagneten. Die Schweißnaht wirkt sich daher kaum oder im optimalen Fall überhaupt nicht störend auf den Magnetfluss der Rotor-Permanentmagnete aus.

Nach einer Weiterbildung der Erfindung ist an der Außenseite jedes Abschnitts des Kerns, der zwischen jeweils zwei in Drehrichtung des Rotors gesehen benachbarten Permanentmagneten liegt, jeweils wenigstens eine Schweißnaht vorgesehen. Dadurch kann das den Kern bildende Blechpaket in optimaler Weise von den Schweißnähten zusammengehalten werden, ohne dass sich diese störend auf den Magnetfluss der Rotor-Permanentmagnete auswirken.

Nach einer Ausgestaltung der Erfindung sind die Stahlbleche des Pakets mittels Backlack miteinander verbackt. Dadurch können die Stahlbleche besonders gut zusammengehalten werden. Bevorzugt werden die Stahlbleche vor dem Bilden des Pakets mit Backlack versehen und nach dem Zusammensetzen der Stahlbleche zu dem Paket durch Erhitzen des Backlacks miteinander verbackt.

Vorzugsweise ist jeder Permanentmagnet im Inneren des Kerns in einer Aufnahme angeordnet, die gasdicht verschlossen ist. Die Permanentmagnete können somit in der jeweiligen Aufnahme gasdicht eingekapselt sein und somit vor Versprödung, zum Beispiel durch Wasserstoff, oder vor Korrosion, zum Beispiel durch ein von der Pumpe gefördertes korrosiv wirkendes Gas, geschützt werden.

Nach einer Ausgestaltung der Erfindung weist der Rotor in Umfangsrichtung des Rotors gesehen eine vorgegebene Anzahl an Rotorpolen auf, wobei jeder Rotorpol wenigstens eine der Aufnahmen für den oder die Permanentmagnete umfasst.

Durch die Anordnung der Permanentmagnete in den Aufnahmen sind die Permanentmagnete eingebettet bzw. vergraben. Dadurch werden die Permanentmagnete auch bei hohen Drehzahlen des Rotors des Elektromotors in den Aufnahmen sicher gehalten. Bandagen zum Halten der Permanentmagnete können daher eingespart werden. Unter anderem weil kein Platz für Bandagen vorgesehen werden muss, kann der effektive Luftspalt zwischen dem Rotor und dem Stator des Elektromotors klein gehalten werden. Dies wirkt sich vorteilhaft auf den Betrieb und die Leistungsfähigkeit des Elektromotors und somit der Vakuumpumpe aus. Insbesondere hat ein kleiner effektiver Luftspalt einen niedrigen Kurzschlussstrom zur Folge.

Nach einer Weiterbildung der Erfindung weist jeder Rotorpol eine Aufnahme auf, in der alle Permanentmagnete des Rotorpols eingebettet sind. Eine einzige Aufnahme kann im Vergleich zu mehreren separaten Aufnahmen pro Rotorpol herstellungstechnisch einfacher realisiert werden. Allerdings kann jeder Rotorpol auch für jeden seiner Permanentmagnete eine separate Aufnahme aufweisen.

Die Aufnahme kann derart dimensioniert sein, dass in Umfangsrichtung des Rotors gesehen, in radialer Richtung und/oder in axialer Richtung wenigstens zwei Permanentmagnete nebeneinander in der Aufnahme angeordnet werden können. Dabei beziehen sich die Begriffe "radiale Richtung" und "axiale Richtung" auf die Drehachse des Rotors des Elektromotors, d.h. radiale Richtungen verlaufen radial von der Drehachse weg und eine axiale Richtung verläuft längs der Drehachse.

Die in einer Aufnahme angeordneten Permanentmagnete können im Verbund höhere Magnetfelder erzeugen, so dass die Leistungsfähigkeit des Elektromotors verbessert werden kann. Die Anzahl der Permanentmagnete in radialer und/oder axialer Richtung ist dabei insbesondere auch von der Motorgröße und/oder einem zu erreichenden maximalen Motor-Drehmoment abhängig.

Die Stahlbleche können in axialer Richtung bzw. in Längsrichtung der Drehachse gesehen zwischen zwei Stirnblechen, insbesondere aus Elektroblech, angeordnet sein. Von der Geometrie her können die Stirnbleche gleich ausgestaltet sein wie die Stahl- bzw. Rotorbleche des Kerns, allerdings ohne dass in den Stirnflächen durchgehende Aussparungen vorgesehen sind, die die Aufnahmen für die Permanentmagnete ergeben, wenn die Stahlbleche zum Rotorkern zusammengesetzt sind.

Die Stirnbleche können die Aufnahmen an ihren außen liegenden Enden verdecken und/oder abdichten. Die in den Aufnahmen angeordneten Permanentmagnete können somit unter Verwendung der Stirnbleche eingekapselt und vor Versprödung und Korrosion geschützt werden.

Nach einer Weiterbildung der Erfindung weist jeder Rotorpol eine einer Richter-Kontur entsprechende Außenkontur auf. Dabei verläuft die Außenkontur entsprechend einer inversen Cosinus-Funktion, so dass sich zwischen dem Rotorpol und dem Stator des Elektromotors eine zumindest näherungsweise sinusförmige Luftspaltflussdichteverteilung ergibt. Diese bewirkt bei laufendem Elektromotor eine zumindest näherungsweise sinusförmige induzierte Spannung in den statorseitigen Leitersträngen, was sich wiederum positiv auf den Betrieb des Elektromotors auswirkt.

Der Rotor kann aber auch eine Außenkontur aufweisen, die einer Kreisform entspricht. Dabei entspricht die Außenkontur jedes Rotorpols einem Teilkreis.

Nach einer Weiterbildung der Erfindung umfasst der Rotor in Umfangsrichtung des Rotors gesehen eine vorgegebene Anzahl an Rotorpolen, wobei jeder Rotorpol wenigstens zwei Permanentmagnete umfasst, wobei die Permanentmagnete eines jeweiligen Rotorpols, insbesondere in einer, zwei, drei oder noch mehr Schichten, V-förmig angeordnet sind. Dadurch kann der Magnetfluss für jeden Pol konzentriert werden, wodurch die Betriebseigenschaften des Elektromotors verbessert werden.

Am Stator kann jeder statorseitige elektrische Wicklungsstrang nach Art einer verteilten Einschichtwicklung oder nach Art einer verteilten Zweischichtwicklung oder nach Art einer Zahnspulenwicklung angeordnet sein.

Nach einer Weiterbildung der Erfindung ist wenigstens einer der Permanentmagnete und bevorzugt jeder der Permanentmagnete ein Ferritmagnet und besonders bevorzugt ein hartmagnetischer Ferritmagnet, insbesondere ein Barium-Ferritmagnet, oder ein Seltenerdmagnet.

Wenigstens einer der Permanentmagnete und bevorzugt jeder der Permanentmagnete kann an magnetischem Material NdFeB oder SmCo, insbesondere SmCo₅ oder Sm₂Co₁₇, aufweisen oder aus NdFeB oder SmCo, insbesondere SmCo₅ oder Sm₂Co₁₇, bestehen.

Wenigstens einer der Permanentmagnete und bevorzugt jeder der Permanentmagnete kann eine vor Versprödung, insbesondere durch Wasserstoff, und/oder vor Korrosion schützende Beschichtung aufweisen. Die Beschichtung kann eine Metallschicht und/oder eine Kunststoffschicht aufweisen. Vorzugsweise befindet sich die Kunststoffschicht über der Metallschicht. Bei der Kunststoffschicht kann es sich bevorzugt um eine Schicht aus Epoxy-Sprühlack handeln. Die Metallschicht kann Zinn, Wolfram, Gold, Silber und/oder Aluminium umfassen oder aus einem der genannten Metalle bestehen.

Im Inneren des Rotorkerns können um die Rotordrehachse herum angeordnete Ausnehmungen vorgesehen sein, durch die das Gewicht des Rotors reduziert wird. Vorzugsweise befinden sich die Ausnehmungen in radialer Richtung gesehen weiter innen als die Aufnahmen für die Permanentmagnete. Vorzugsweise weist jede Ausnehmung in radialer Richtung gesehen einen im Wesentlichen dreieckigen Querschnitt auf.

Nach einer bevorzugten Ausgestaltung der Erfindung weist jeder Permanentmagnet eine Magnetisierungsrichtung auf, wobei die Magnetisierungsrichtung wenigstens eines Permanentmagneten nicht parallel verläuft zu der in Bezug auf die Drehachse gesehen radialen Richtung, die zumindest näherungsweise die Mitte des Permanentmagneten schneidet.

Bevorzugt sind alle Permanentmagnete derart angeordnet, dass ihre jeweilige Magnetisierungsrichtung nicht parallel ausgerichtet ist zu der jeweiligen radialen Richtung, die zumindest näherungsweise die Mitte des jeweiligen Permanentmagneten schneidet.

Die Permanentmagnete sind somit im Rotorkern, insbesondere in den jeweiligen Aufnahmen für die Permanentmagnete, derart angeordnet, dass deren Magnetisierungsrichtung nicht parallel zu einer radialen Richtung, bezogen auf die Drehachse des Rotors, verläuft. Bevorzugt verläuft aber die Magnetisierungsrichtung in einer Ebene, die senkrecht zur Drehachse des Rotors verläuft. Dabei wird als Magnetisierungsrichtung die Richtung angesehen, die vom Südpol zum Nordpol des Permanentmagneten verläuft.

Nach einer bevorzugten Weiterbildung ist die Magnetisierungsrichtung des wenigstens einen Permanentmagneten und bevorzugt jedes Permanentmagneten in einem Winkel zwischen 10 Grad und 170 Grad, bevorzugt zwischen 25 Grad und 155 Grad, zu der jeweiligen radialen Richtung angeordnet.

Die Magnetisierungsrichtung des wenigstens einen Permanentmagneten und bevorzugt jedes Permanentmagneten kann auch in einem Winkel von zumindest annähernd 90 Grad zur jeweiligen radialen Richtung ausgerichtet sein.

Bei dem Elektromotor der erfindungsgemäßen Vakuumpumpe ist, insbesondere wenn der Elektromotor als Synchronmaschine ausgestaltet ist, außerdem aufgrund des kleinen effektiven Luftspalts und der im Innern des Rotorkerns angeordneten Permanentmagnete ein Feldschwächbetrieb mit einem gegenüber oberflächenmontierten Permanentmagneten geringeren Strom möglich. Beim dem an sich bekannten Feldschwächbetrieb wird das durch die Permanentmagnete erzeugte Magnetfeld durch ein elektrisch erregtes Gegenfeld des Stators geschwächt. Ein Vorteil des Feldschwächbetriebs ist, dass ein verhältnismäßig großer Drehzahlbereich mit einer konstanten mechanischen Ausgangsleistung realisiert werden kann.

Weiterhin ist an dem Elektromotor der erfindungsgemäßen Vakuumpumpe vorteilhaft, dass dieser insbesondere wegen der vergrabenen Permanentmagnete ein sogenanntes Reluktanzmoment nutzen kann.

Der Rotor des Elektromotors kann über eine Welle mit einem beweglichen Teil des Pumpmechanismus, wie etwa einem Pump-Rotor einer Turbomolekularpumpe oder einer Wälzkolben-Pumpe oder einer Schrauben-Vakuumpumpe oder einer Drehschieber-Pumpe, einem Pump-Kolben einer Hubkolbenpumpe, einer beweglichen Spirale einer Scroll-Pumpe oder einer Pump-Membran einer Membranpumpe gekoppelt sein, um eine Rotationsbewegung des Rotors auf den beweglichen Teil des Pumpmechanismus zu übertragen.

Der Stator kann eine Innenausnehmung zur drehbeweglichen Aufnahme des Rotors aufweisen, in der der Rotor drehbeweglich aufgenommen ist.

Nachfolgend wird die Erfindung unter Bezugnahme auf die beigefügten Figuren beispielhaft beschrieben. Es zeigen, jeweils schematisch,
- Fig. 1: eine Vakuumpumpe im Querschnitt,
- Fig. 2: einen radialen Querschnitt durch einen Stator und einen Rotor eines Elektromotors einer erfindungsgemäßen Vakuumpumpe,
- Fig. 3: einen radialen Querschnitt durch eine andere Variante eines Rotors eines Elektromotors einer erfindungsgemäßen Vakuumpumpe,
- Fig. 4: einen radialen Querschnitt durch noch eine andere Variante eines Rotors eines Elektromotors einer erfindungsgemäßen Vakuumpumpe, und
- Fig. 5: einen radialen Querschnitt durch noch eine andere Variante eines Rotors eines Elektromotors einer erfindungsgemäßen Vakuumpumpe.

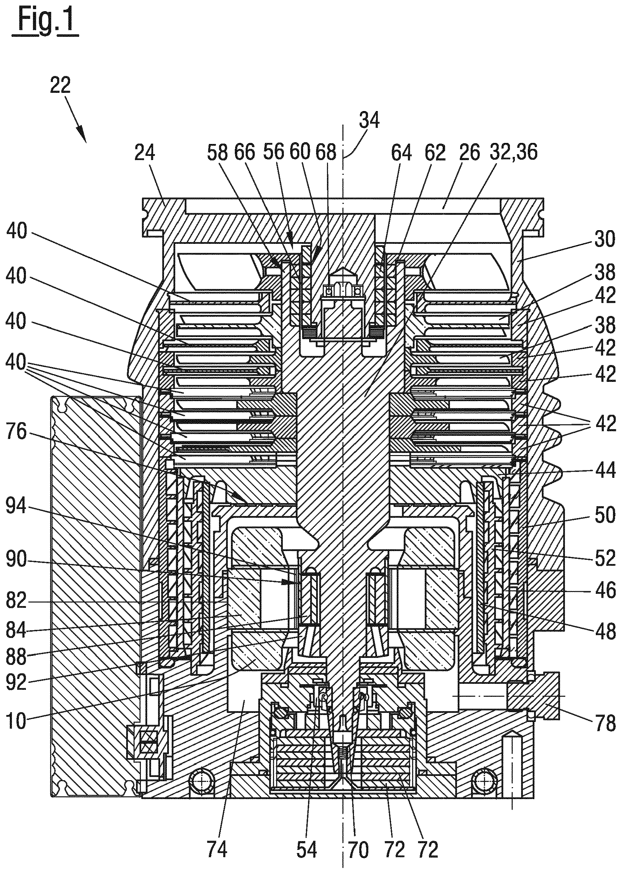

Die in Fig. 1 gezeigte Vakuumpumpe 22 umfasst einen von einem Einlassflansch 24 umgebenen Pumpeneinlass 26 sowie mehrere Pumpstufen zur Förderung des an dem Pumpeneinlass 26 anstehenden Gases zu einem in Fig. 1 nicht dargestellten Pumpenauslass. Die Vakuumpumpe 22 umfasst ein Gehäuse 30 und einen in dem Gehäuse 30 angeordneten Rotor 32 mit einer um eine Rotationsachse 34 drehbar gelagerten Rotorwelle 36.

Die Pumpe 22 ist als Turbomolekularpumpe ausgebildet und umfasst mehrere pumpwirksam miteinander in Serie geschaltete turbomolekulare Pumpstufen mit mehreren an der Rotorwelle 36 befestigten turbomolekularen Rotorscheiben 38 und in axialer Richtung zwischen den Rotorscheiben 38 angeordneten und in dem Gehäuse 30 festgelegten Statorscheiben 40. Die Statorscheiben 40 sind durch Abstandsringe 42 in einem gewünschten axialen Abstand zueinander gehalten.

Die Vakuumpumpe 22 umfasst außerdem drei in radialer Richtung ineinander angeordnete und pumpwirksam miteinander in Serie geschaltete Holweckpumpstufen. Der rotorseitige Teil der Holweckpumpstufen umfasst eine mit der Rotorwelle 36 verbundene Rotornabe 44 und zwei an der Rotornabe 44 befestigte und von dieser getragene zylindermantelförmige Holweckrotorhülsen 46, 48, die koaxial zu der Rotationsachse 34 orientiert und in radialer Richtung ineinander geschachtelt sind. Ferner sind zwei zylindermantelförmige Holweckstatorhülsen 50, 52 vorgesehen, die ebenfalls koaxial zu der Rotationsachse 34 orientiert und in radialer Richtung ineinander geschachtelt sind. Die pumpaktiven Oberflächen der Holweckpumpstufen sind jeweils durch die einander unter Ausbildung eines engen radialen Holweckspalts gegenüberliegenden radialen Mantelflächen jeweils einer Holweckrotorhülse 46, 48 und einer Holweckstatorhülse 50, 52 gebildet. Dabei ist jeweils eine der pumpaktiven Oberflächen glatt ausgebildet - vorliegend diejenige der Holweckrotorhülse 46 bzw. 48 - und die gegenüberliegende pumpaktive Oberfläche der Holweckstatorhülse 50, 52 weist eine Strukturierung mit schraubenlinienförmig um die Rotationsachse 34 herum in axialer Richtung verlaufenden Nuten auf, in denen bei der Rotation des Rotors 32 das Gas vorangetrieben und dadurch gepumpt wird.

Die drehbare Lagerung der Rotorwelle 36 wird durch ein Wälzlager 54 im Bereich des Pumpenauslasses und ein Permanentmagnetlager 56 im Bereich des Pumpeneinlasses 26 bewirkt.

Das Permanentmagnetlager 56 umfasst eine rotorseitige Lagerhälfte 58 und eine statorseitige Lagerhälfte 60, welche jeweils einen Ringstapel aus mehreren in axialer Richtung aufeinander gestapelten permanentmagnetischen Ringen 62, 64 umfassen, wobei sich die Magnetringe 62, 64 unter Ausbildung eines radialen Lagerspalts 66 gegenüberliegen.

Innerhalb des Magnetlagers 56 ist ein Not- bzw. Fanglager 68 vorgesehen, welches als ungeschmiertes Wälzlager ausgebildet ist und im normalen Betrieb der Vakuumpumpe ohne Berührung leer läuft und erst bei einer übermäßigen radialen Auslenkung des Rotors 32 gegenüber dem Stator in Eingriff gelangt, um einen radialen Anschlag für den Rotor 32 zu bilden, der eine Kollision der rotorseitigen Strukturen mit den statorseitigen Strukturen verhindert.

Im Bereich des Wälzlagers 54 ist an der Rotorwelle 36 eine konische Spritzmutter 70 mit einem zu dem Wälzlager 54 hin zunehmenden Außendurchmesser vorgesehen. Die Spritzmutter 70 steht mit zumindest einem Abstreifer eines mehrere aufeinander gestapelte saugfähige Scheiben 72 umfassenden Betriebsmittelspeichers in gleitendem Kontakt, welche mit einem Betriebsmittel wie z.B. einem Schmiermittel für das Wälzlager 54 getränkt sind. Im Betrieb der Vakuumpumpe wird das Betriebsmittel durch kapillare Wirkung von dem Betriebsmittelspeicher über den Abstreifer auf die rotierende Spritzmutter 70 übertragen und infolge der Zentrifugalkraft entlang der Spritzmutter 70 in Richtung des größer werdenden Außendurchmessers der Spritzmutter 70 zu dem Wälzlager 54 hin gefördert, wo es zum Beispiel eine schmierende Funktion erfüllt.

Die Vakuumpumpe 22 umfasst einen Motorraum 74, in den sich die Rotorwelle 36 hinein erstreckt. Der Motorraum 74 ist im Bereich des Eintritts der Rotorwelle 36 durch eine Labyrinthdichtung 76 gegenüber dem Arbeits- bzw. Schöpfraum der Vakuumpumpe abgedichtet. Ein Sperrgaseinlass 78 ermöglicht den Einlass eines Sperrgases in den Motorraum 74.

In dem Motorraum 74 ist der als Elektromotor, insbesondere als Synchronmotor ausgebildete, Antriebsmotor der Vakuumpumpe 22 angeordnet. Der Antriebsmotor dient zum drehenden Antreiben des Rotors 32 und umfasst einen Motorstator 82 mit einem Kern 84 und mit mehreren in Fig. 1 nur schematisch dargestellten Spulen 10, die in an der radialen Innenseite des Kerns 84 vorgesehenen Nuten des Kerns 84 festgelegt sind. Der Kern 84 besteht aus einem Blechpaket mit mehreren in axialer Richtung aufeinander gestapelten Blechscheiben aus einem weichmagnetischen Material.

Der Rotor des Antriebsmotors, welcher auch als Läufer oder Anker bezeichnet wird, ist durch die Rotorwelle 36 gebildet, die sich durch den Motorstator 82 hindurch erstreckt. Auf dem sich durch den Motorstator 82 hindurch erstreckenden Abschnitt der Rotorwelle 36 ist radial außenseitig eine Permanentmagnetanordnung 88 festgelegt. Zwischen dem Motorstator 82 und dem sich durch den Motorstator 82 hindurch erstreckenden Abschnitt der Rotorwelle 36 ist ein radialer Motorspalt 90 ausgebildet, über den sich der Motorstator 82 und die Permanentmagnetanordnung 88 zur Übertragung des Antriebsmoments magnetisch beeinflussen.

Die Permanentmagnetanordnung 88 ist in axialer Richtung durch eine auf die Rotorwelle 36 aufgesteckte Befestigungshülse 92 an der Rotorwelle 36 fixiert.

Eine Kapselung 94 umgibt die Permanentmagnetanordnung 88 an deren radialer Außenseite und dichtet diese gegenüber dem Motorspalt 90 ab.

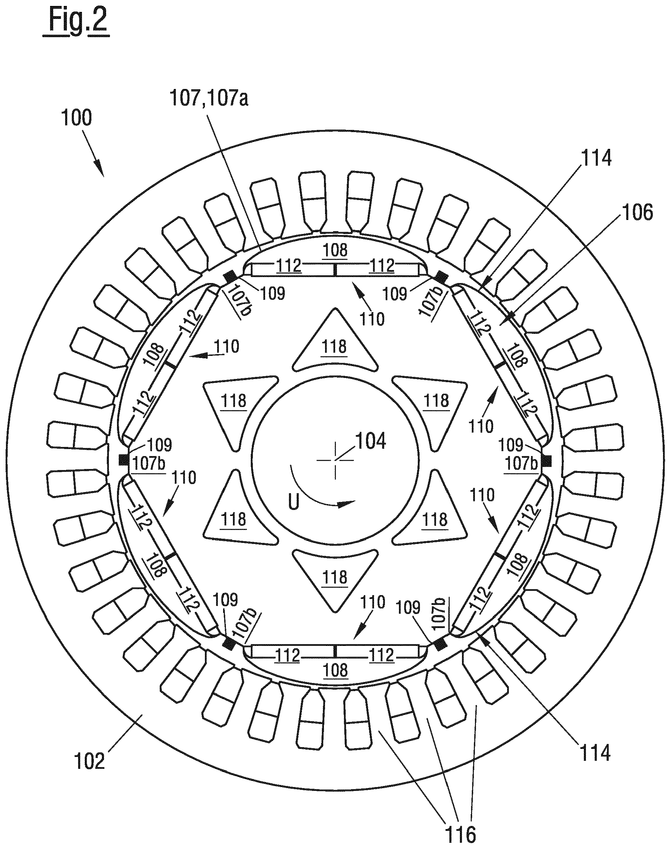

Der in einem radialen Querschnitt in Fig. 2 dargestellte Elektromotor 100 einer erfindungsgemäßen Vakuumpumpe weist einen außenliegenden Stator 102 und einen mit dem Stator 102 zusammenwirkenden, um eine Drehachse 104 drehbaren Rotor 106 auf. Der Rotor 106 weist einen Kern 107 auf, der von einem Paket aus Stahlblechen 107a gebildet ist, wobei ein Stahlblech 107a im Querschnitt in Fig. 2 gezeigt ist. Die Stahlbleche 107a sind in axialer Richtung, also in Längsrichtung der Drehachse 104, aneinandergereiht, so dass sie das Paket bzw. den Kern 107 bilden. Bei dem Stahlblech 107a handelt es sich insbesondere um ein Elektroblech. Der Rotor 106 weist in Umfangsrichtung U des Rotors 106 gesehen eine vorgegebene Anzahl an Rotorpolen 108 auf, wobei für jeden Rotorpol 108 im Inneren des Kerns 107 eine Aufnahme 110 vorgesehen ist, in der wenigstens ein Permanentmagnet 112 angeordnet ist.

Die Permanentmagnete 112 sind somit im Inneren des Kerns 107 um die Drehachse 104 herum angeordnet. Im Unterschied zu dem Antriebsmotor der Vakuumpumpe 22 der Fig. 1, bei dem die Permanentmagnetanordnung 88 radial außenseitig an der Rotorwelle 36 angebracht und von der Kapselung 94 eingekapselt ist, sind bei dem Elektromotor 100 die Permanentmagnete 112 somit im Kern 107 vergraben bzw. darin eingebettet.

Im in Fig. 2 dargestellten Beispiel beträgt die vorgegebene Anzahl an Rotorpolen 108 sechs Rotorpole. In jeder Aufnahme 110 sind in Umfangsrichtung U des Rotors 106 gesehen zwei Permanentmagnete 112 hintereinander angeordnet. Nicht gezeigt ist, dass auch in axialer Richtung, also in Längsrichtung der Drehachse 104 gesehen, jeweils zwei oder mehr Permanentmagnete 112 nebeneinander in der jeweiligen Aufnahme 110 angeordnet sein können. Außerdem können, wiederum bezogen auf die Drehachse 104, in radialer Richtung gesehen zwei oder mehr Permanentmagnete 112 in der jeweiligen Aufnahme 110 vorgesehen sein, was ebenfalls nicht gezeigt ist.

Jeder Rotorpol 108 weist eine Außenkontur 114 auf, die einer sogenannten Richter-Kontur entspricht. Die Außenkontur 114 verläuft dabei wenigstens näherungsweise in Form einer inversen Cosinus-Funktion und bildet mit der Innenkontur des Stators 102 einen effektiven Luftspalt, der eine möglichst sinusförmige Luftspaltflussdichteverteilung ermöglicht.

Zur Gewichtsreduktion ist in jedem Pol 108 eine Ausnehmung 118 vorgesehen. Die Ausnehmung 118 weist, wie Fig. 2 zeigt, einen im Wesentlichen dreieckigen Querschnitt auf.

Bei den Permanentmagneten 112 handelt es sich bevorzugt um Ferritmagnete, insbesondere um Barium-Ferritmagnete, oder um Seltenerdmagnete. Jeder Permanentmagnet 112 kann ferner eine Beschichtung aufweisen, die ihn vor Versprödung, insbesondere durch Wasserstoff, und/oder Korrosion schützt.

Ferner können die Stahl- bzw. Rotorbleche 107a in axialer Richtung gesehen zwischen zwei Stirnblechen, die ebenfalls zum Beispiel aus Elektroblech ausgebildet sein können, angeordnet sein (nicht gezeigt). Durch die beiden Stirnbleche können die Aufnahmen 110 für die Permanentmagnete 112 an ihren axialen Enden gasdicht verschlossen werden. Die Permanentmagnete 112 können somit in den Aufnahmen 110 gasdicht eingekapselt werden, um diese vor Korrosion und/oder Versprödung zu schützen. Eine zusätzliche Beschichtung der einzelnen Permanentmagnete kann daher entfallen.

Auf Seiten des Stators 102 sind Statorzähne 116 vorgesehen, die nach radial innen ragen. Statorseitig sind in an sich bekannter Weise elektrische Wicklungsstränge vorgesehen, die von den Statorzähnen nach Art einer Zahnspulenwicklung getragen werden (nicht gezeigt).

Der Elektromotor 100 der Fig. 2 kann in den Motorraum 74 der Vakuumpumpe 22 der Fig. 1 anstelle des mit Bezug auf die Fig. 1 beschriebenen Antriebsmotors eingebaut werden. Dabei wird der Rotor 106 mit der Rotorwelle 36 gekoppelt, so dass die Rotorwelle 36 mittels des Rotors 106 angetrieben werden kann. Dadurch wird eine Vakuumpumpe gebildet, deren Elektromotor 100 rotorseitige Permanentmagnete 112 aufweist, die innerhalb des Rotors 106 angeordnet und somit im Rotor 106 vergraben bzw. eingebettet sind.

Bei dem Elektromotor 100 der Fig. 2 weist der Kern 107 Abschnitte 107b auf, die zwischen zwei in Drehrichtung bzw. Umfangsrichtung U des Rotors 106 gesehen benachbarten Permanentmagneten 112 liegen. An der Außenseite dieser Abschnitte 107b verläuft jeweils eine Schweißnaht 109 in paralleler Richtung zur Drehachse 104. Die Schweißnähte 109 sind dabei mittig zentriert auf dem jeweiligen Abschnitt 107b aufgebracht. Sie können jedoch auch außermittig angeordnet sein. Durch die Schweißnähte 109 werden die aneinandergereihten Stahlbleche 107a zusammengehalten, so dass der Kern 107 eine feste Anordnung aus den Stahlblechen 107a bildet. Zusätzlich oder alternativ zu den Schweißnähten 109 können die Stahlbleche 107a mittels eines Backlacks miteinander verbackt sein.

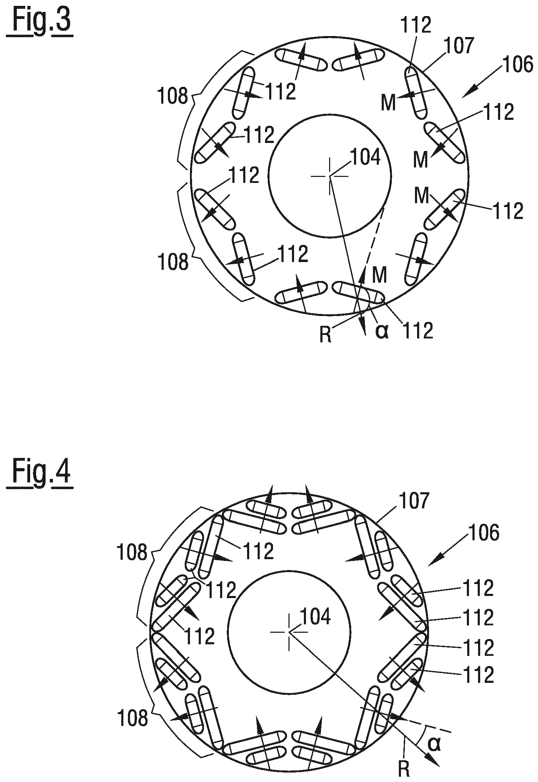

In den Fig. 3 bis 5 sind andere Varianten des Rotors 106 dargestellt. Dabei ist jeder Permanentmagnet 112 mit seiner Magnetisierungsrichtung M eingezeichnet, wobei die Magnetisierungsrichtung M diejenige Richtung ist, die vom Südpol zum Nordpol des jeweiligen Permanentmagneten 112 gerichtet ist. Bei den in den Fig. 3 bis 5 gezeigten Varianten sind die Permanentmagnete 112 derart im Kern 107 eingebettet, dass die Magnetisierungsrichtung M jedes Permanentmagneten 112 nicht parallel verläuft zu der jeweiligen in Bezug auf die Drehachse 104 gesehen radialen Richtung R, die zumindest näherungsweise die Mitte des jeweiligen Permanentmagneten 112 schneidet. Dies ist in den Fig. 3 bis 5 exemplarisch für einen Permanentmagneten 112 verdeutlicht.

Insbesondere ist die Magnetisierungsrichtung M jedes Permanentmagneten 112 in einem Winkel α zu der jeweiligen radialen Richtung R geneigt, wobei der Winkel α im Bereich zwischen 10 Grad und 170 Grad, bevorzugt zwischen 25 Grad und 155 Grad, liegt.

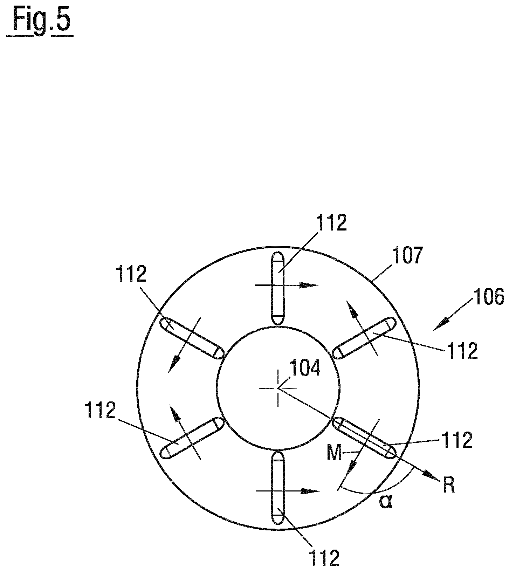

Wie bei der Variante der Fig. 5 gezeigt ist, kann der Winkel α auch zumindest annähernd 90 Grad betragen.

Bei den Varianten der Fig. 3 bis 5 kann, wie in Bezug auf die Fig. 2 beschrieben wurde, ebenfalls wenigstens eine Schweißnaht an der Außenseite eines Abschnitts des Kerns 107 angeordnet sein, der zwischen zwei in Drehrichtung des Rotors 106 benachbarten Permanentmagneten 112 liegt, um das den Kern 107 bildende Blechpaket zusammenzuhalten. Alternativ oder ergänzend können die Bleche des Pakets mittels Backlack miteinander verbackt sein.

Bei der Variante der Fig. 3 ist vorgesehen, dass jeweils zwei in Rotordrehrichtung benachbarte Permanentmagnete 112 einen Rotorpol 108 bilden. Der Rotor 106 der Fig. 3 ist somit 6-polig. Bei der Variante der Fig. 3 sind die Permanentmagnete 112 eines jeweiligen Pols 108 V-förmig in den Kern 107 eingebettet.

Bei der Variante der Fig. 4 bilden jeweils vier Permanentmagnete 112 einen Rotorpol 108, so dass Fig. 4 ebenfalls einen 6-poligen Rotor 106 zeigt. Die Permanentmagnete 112 eines Pols 108 sind dabei - in radialer Richtung gesehen - in zwei Schichten V-förmig angeordnet, wie Fig. 4 zeigt.

Durch die V-förmige Anordnung der Permanentmagnete 112 eines jeweiligen Pols 108 kann der Magnetfluss jedes Pols 108 im Luftspalt zwischen dem Rotor 106 und dem Stator 102 (vgl. Fig. 2) in dem Bereich zwischen den Permanentmagneten 112 konzentriert werden, wodurch die Betriebseigenschaften des Elektromotors weiter verbessert werden können.

Die in Fig. 1 dargestellte Vakuumpumpe 22 ist als Turbomolekularpumpe ausgebildet. Ein Elektromotor mit einem Rotor gemäß den Fig. 2 bis 5 kann aber auch in anderen Pumpentypen zum Einsatz kommen, zum Beispiel in einer Vorpumpe zu einer Turbomolekularpumpe.

### Bezugszeichenliste

- 22: Vakuumpumpe
- 24: Einlassflansch
- 26: Pumpeneinlass
- 30: Gehäuse
- 32: Rotor
- 34: Rotationsachse
- 36: Rotorwelle
- 38: Rotorscheibe
- 40: Statorscheibe
- 42: Abstandsring
- 44: Rotornabe
- 46,48: Holweckrotorhülse
- 50,52: Holweckstatorhülse
- 54: Wälzlager
- 56: Permanentmagnetlager
- 58, 60: Lagerhälfte
- 62, 64: Magnetring
- 66: Lagerspalt
- 68: Fanglager
- 70: Spritzmutter
- 72: Saugfähige Scheibe
- 74: Motorraum
- 76: Labyrinthdichtung
- 78: Sperrgaseinlass
- 82: Motorstator
- 84: Kern
- 88: Permanentmagnetanordnung
- 90: Motorspalt
- 92: Befestigungshülse
- 94: Kapselung
- 100: Elektromotor
- 102: Stator
- 104: Drehachse
- 106: Rotor
- 107: Kern
- 107a: Stahlblech
- 107b: Abschnitt
- 108: Rotorpol
- 109: Schweißnaht
- 110: Aufnahme
- 112: Permanentmagnet
- 114: Außenkontur
- 116: Statorzähne
- 118: Ausnehmung
- U: Umfangsrichtung
- M: Magnetisierungsrichtung
- α: Winkel

## Patentansprüche

1. Vakuumpumpe, insbesondere Turbomolekularpumpe oder Vorvakuumpumpe für eine Turbomolekularpumpe, wie etwa eine Scroll-, Schraubenvakuum-, Membran-, Drehschieber-, Hubkolben- oder Wälzkolbenpumpe, umfassend wenigstens einen Pumpmechanismus zum Pumpen eines Gases durch die Vakuumpumpe und einen, insbesondere als Synchronmotor ausgestalteten, Elektromotor (100) zum Antreiben des Pumpmechanismus,
wobei der Elektromotor (100) einen Stator (102) und einen mit dem Stator (102) zusammenwirkenden, um eine Drehachse (104) drehbaren Rotor (106) aufweist, wobei der Rotor (106) einen aus einem Paket von Stahlblechen (107a) gebildeten Kern (107) und Permanentmagnete (112) aufweist, die um die Drehachse (104) herum im Inneren des Kerns (107) angeordnet sind,
wobei der Rotor (106) in Umfangsrichtung (U) des Rotors (106) gesehen eine vorgebbare Anzahl von Rotorpolen (108) aufweist;
wobei das Paket von Stahlblechen (107a) von wenigstens einer Schweißnaht (109) zusammengehalten wird, die an der Außenseite eines Abschnitts (107b) des Kerns (107) angeordnet ist, und sich die Schweißnaht (109) parallel zur Drehachse (104) erstreckt, und
wobei die Schweißnaht (109) in einer in dem Paket von Stahlblechen vorgesehenen, parallel zur Drehachse (104) verlaufenden Nut angeordnet ist,
**dadurch gekennzeichnet, dass**
jeder Rotorpol (108) wenigstens zwei Permanentmagnete (112) umfasst, der Abschnitt (107b) zwischen Permanentmagneten (112) zweier in Drehrichtung des Rotors (106) gesehen benachbarter Rotorpole (108) liegt und die Schweißnaht (109) mittig zentriert auf dem Abschnitt (107b) aufgebracht ist.

2. Vakuumpumpe nach Anspruch 1,
**dadurch gekennzeichnet, dass**
die Schweißnaht (109) in Drehrichtung des Rotors (106) gesehen in der Mitte des Abschnitts des Kerns (107) angeordnet ist.

3. Vakuumpumpe nach einem der vorhergehenden Ansprüche,
**dadurch gekennzeichnet, dass**
an der Außenseite jedes Abschnitts (107b) des Kerns (107), der zwischen jeweils zwei in Drehrichtung des Rotors (106) gesehen benachbarten Permanentmagneten (112) liegt, jeweils wenigstens eine Schweißnaht (109) vorgesehen ist.

4. Vakuumpumpe nach einem der vorhergehenden Ansprüche,
**dadurch gekennzeichnet, dass**
die Stahlbleche (107a) des Pakets mittels Backlack miteinander verbackt sind.

5. Vakuumpumpe nach einem der vorhergehenden Ansprüche,
**dadurch gekennzeichnet, dass**
dass jeder Permanentmagnet (112) im Inneren des Kerns (107) in einer Aufnahme (110) angeordnet ist, die gasdicht verschlossen ist.

6. Vakuumpumpe nach Anspruch 5,
**dadurch gekennzeichnet, dass**
jeder Permanentmagnet (112) in einer eigenen Aufnahme (110) angeordnet ist.

7. Vakuumpumpe nach einem der vorhergehenden Ansprüche,
dadurch **gekennzeiehnet**,
dass in radialer Richtung und/oder in axialer Richtung und/oder in Drehrichtung des Rotors (106) gesehen in einer jeweiligen Aufnahme (110), die gasdicht verschlossen ist, wenigstens zwei Permanentmagnete (112) nebeneinander angeordnet sind.

8. Vakuumpumpe nach einem der vorhergehenden Ansprüche,
**dadurch gekennzeichnet, dass**
die Stahlbleche (107a) des Pakets in Längsrichtung der Drehachse (104) gesehen aneinandergereiht sind, und/oder
dass die Stahlbleche (107a) in Längsrichtung der Drehachse (104) gesehen zwischen zwei Stirnblechen, insbesondere aus Elektroblech, angeordnet sind.

9. Vakuumpumpe nach einem der vorhergehenden Ansprüche,
**dadurch gekennzeichnet, dass**
jeder Rotorpol (108) eine einer Richter-Kontur entsprechende Außenkontur (114) aufweist oder jeder Rotorpol (108) eine einem Teilkreis entsprechende Außenkontur (114) aufweist.

10. Vakuumpumpe nach einem der vorhergehenden Ansprüche,
**dadurch gekennzeichnet, dass**
jeder Rotorpol (108) wenigstens zwei Permanentmagnete (112) umfasst, wobei die Permanentmagnete (112) eines jeweiligen Rotorpols (108), insbesondere in einer, zwei, drei oder noch mehr Schichten, V-förmig angeordnet sind.

11. Vakuumpumpe nach einem der vorhergehenden Ansprüche,
**dadurch gekennzeichnet, dass**
jeder statorseitige elektrische Wicklungsstrang nach Art einer verteilten Einschichtwicklung oder nach Art einer verteilten Zweischichtwicklung oder nach Art einer Zahnspulenwicklung am Stator angeordnet ist.

12. Vakuumpumpe nach einem der vorhergehenden Ansprüche,
**dadurch gekennzeichnet, dass**
wenigstens einer der Permanentmagnete (112) und bevorzugt jeder der Permanentmagnete (112) ein Ferritmagnet, bevorzugt ein hartmagnetischer Ferritmagnet und besonders bevorzugt ein Barium-Ferritmagnet, oder ein Seltenerdmagnet ist und/oder
dass wenigstens einer der Permanentmagnete (112) und bevorzugt jeder der Permanentmagnete (112) an magnetischem Material NdFeB oder SmCo, insbesondere SmCo₅ oder Sm₂Co₁₇, aufweist oder aus NdFeB oder SmCo, insbesondere SmCo₅ oder Sm₂Co₁₇, besteht.

13. Vakuumpumpe nach einem der vorhergehenden Ansprüche,
**dadurch gekennzeichnet, dass**
wenigstens einer der Permanentmagnete (112) und bevorzugt jeder der Permanentmagnete (112) eine vor Versprödung und/oder vor Korrosion schützende Beschichtung aufweist.

14. Vakuumpumpe nach einem der vorhergehenden Ansprüche,
**dadurch gekennzeichnet, dass**
jeder Permanentmagnet (112) eine Magnetisierungsrichtung (M) aufweist und die Magnetisierungsrichtung (M) wenigstens eines Permanentmagneten (112) nicht parallel verläuft zu der in Bezug auf die Drehachse (104) gesehen radialen Richtung (R), die zumindest näherungsweise die Mitte des Permanentmagneten (112) schneidet.

15. Vakuumpumpe nach Anspruch 14,
**dadurch gekennzeichnet, dass**
die Magnetisierungsrichtung (M) des Permanentmagneten (112) in einem Winkel (α) zwischen 10 Grad und 170 Grad zu der jeweiligen radialen Richtung angeordnet ist oder der Winkel (α) zumindest annähernd 90 Grad beträgt.

## Claims

1. A vacuum pump, in particular a turbomolecular pump or a backing pump for a turbomolecular pump, such as a scroll pump, a screw vacuum pump, a diaphragm pump, a rotary vane pump, a reciprocating piston pump or a Roots pump, comprising at least one pump mechanism for pumping a gas through the vacuum pump; and an electric motor (100), in particular configured as a synchronous motor, for driving the pump mechanism, wherein the electric motor (100) has a stator (102) and a rotor (106) which cooperates with the stator (102) and which is rotatable about an axis of rotation (104), with the rotor (106) having a core (107) formed from a packet of steel sheets (107a) and having permanent magnets (112) which are arranged about the axis of rotation (104) in the interior of the core (107); wherein the rotor (106) has a predefinable number of rotor poles (108) viewed in the peripheral direction (U) of the rotor (106);
wherein the packet of steel sheets (107a) is held together by at least one weld seam (109) which is arranged at the outer side of a section (107b) of the core (107) and the weld seam (109) extends in parallel with the axis of rotation (104); and
wherein the weld seam (109) is arranged in a groove provided in the packet of steel sheets and extending in parallel with the axis of rotation (104),
**characterized in that**
each rotor pole (108) comprises at least two permanent magnets (112); **in that** the section (107b) is disposed between permanent magnets (112) of two rotor poles (108) which are adjacent viewed in the direction of rotation of the rotor (106); and **in that** the weld seam (109) is applied to the section (107b) in a centrally centered manner.

2. A vacuum pump in accordance with claim 1,
**characterized in that**
the weld seam (109) is arranged at the center of the section of the core (107) viewed in the direction of rotation of the rotor (106).

3. A vacuum pump in accordance with one of the preceding claims,
**characterized in that**
at least one respective weld seam (109) is provided at the outer side of each section (107b) of the core (107) which is disposed between a respective two permanent magnets (112) which are adjacent viewed in the direction of rotation of the rotor (106).

4. A vacuum pump in accordance with any one of the preceding claims,
**characterized in that**
the steel sheets (107a) of the packet are adhesively bonded to one another by means of bonding varnish.

5. A vacuum pump in accordance with any one of the preceding claims,
**characterized in that**
each permanent magnet (112) is arranged in the interior of the core (107) in a receiver (110) which is sealed in a gas-tight manner.

6. A vacuum pump in accordance with claim 5,
**characterized in that**
each permanent magnet (112) is arranged in a separate receiver (110).

7. A vacuum pump in accordance with any one of the preceding claims,
**characterized in that**,
viewed in the radial direction and/or in the axial direction and/or in the direction of rotation of the rotor (106), at least two permanent magnets (112) are arranged next to one another in a respective receiver (110) which is closed in a gas-tight manner.

8. A vacuum pump in accordance with any one of the preceding claims,
**characterized in that**
the steel sheets (107a) of the packet are arranged in a row viewed in the longitudinal direction of the axis of rotation (104); and/or
**in that** the steel plates (107a) are arranged between two end face metal sheets, in particular composed of an electrical sheet, viewed in the longitudinal direction of the axis of rotation (104).

9. A vacuum pump in accordance with any one of the preceding claims,
**characterized in that**
each rotor pole (108) has an outer contour (114) corresponding to a Richter contour or each rotor pole (108) has an outer contour (114) corresponding to a part circle.

10. A vacuum pump in accordance with any one of the preceding claims,
**characterized in that**
each rotor pole (108) comprises at least two permanent magnets (112), with the permanent magnets (112) of a respective rotor pole (108) being arranged in a V shape, in particular in one, two, three or even more layers.

11. A vacuum pump in accordance with any one of the preceding claims,
**characterized in that**
each stator-side electrical winding strand is arranged at the stator in the manner of a distributed single-layer winding or in the manner of a distributed two-layer winding or in the manner of a tooth coil winding.

12. A vacuum pump in accordance with any one of the preceding claims,
**characterized in that**
at least one of the permanent magnets (112), and preferably each of the permanent magnets (112), is a ferrite magnet, preferably a hard magnetic ferrite magnet, and particularly preferably a barium ferrite magnet, or a rare earth magnet; and/or
**in that** at least one of the permanent magnets (112), and preferably each of the permanent magnets (112), comprises a magnetic material NdFeB or SmCo, in particular SmCo₅ or Sm₂Co₁₇, or consists of NdFeB or SmCo, in particular SmCo₅ or Sm₂Co17.

13. A vacuum pump in accordance with any one of the preceding claims,
**characterized in that**
at least one of the permanent magnets (112), and preferably each of the permanent magnets (112), has a coating which protects against embrittlement and/or corrosion.

14. A vacuum pump in accordance with any one of the preceding claims,
**characterized in that**
each permanent magnet (112) has a magnetization direction (M) and the magnetization direction (M) of at least one permanent magnet (112) does not extend in parallel with the direction which is the radial direction (R) with respect to the axis of rotation (104) and which at least approximately intersects the center of the permanent magnet (112).

15. A vacuum pump in accordance with claim 14,
**characterized in that**
the magnetization direction (M) of the permanent magnet (112) is arranged at an angle (α) between 10 degrees and 170 degrees to the respective radial direction or the angle (α) amounts to at least approximately 90 degrees.

## Revendications

1. Pompe à vide, en particulier pompe turbomoléculaire ou pompe à vide préliminaire pour une pompe turbomoléculaire, telle qu'une pompe à spirales, une pompe à vide à vis, une pompe à membrane, une pompe à palettes, une pompe à piston alternatif ou une pompe Roots, comprenant au moins un mécanisme de pompage pour pomper un gaz à travers la pompe à vide et un moteur électrique (100), notamment conçu comme moteur synchrone, pour entraîner le mécanisme de pompage,
dans laquelle
le moteur électrique (100) comprend un stator (102) et un rotor (106) rotatif autour d'un axe de rotation (104) et coopérant avec le stator (102),
le rotor (106) comprend un noyau (107) formé d'un empilement de tôles en acier (107a) et des aimants permanents (112) disposés autour de l'axe de rotation (104) à l'intérieur du noyau (107),
le rotor (106), vu en direction périphérique (U) du rotor (106), comprend un nombre donné de pôles de rotor (108) ;
l'empilement de tôles en acier (107a) est maintenu assemblé par au moins une soudure (109) qui est disposée sur le côté extérieur d'une portion (107b) du noyau (107), et la soudure (109) s'étend parallèlement à l'axe de rotation (104), et
la soudure (109) est disposée dans une rainure prévue dans l'empilement de tôles en acier et s'étendant parallèlement à l'axe de rotation (104),
**caractérisée en ce que**
chaque pôle de rotor (108) comprend au moins deux aimants permanents (112),
la portion (107b) est située entre des aimants permanents (112) de deux pôles de rotor (108) voisins, vus en direction de rotation du rotor (106), et la soudure (109) est appliquée de façon centrée au milieu sur la portion (107b).

2. Pompe à vide selon la revendication 1,
**caractérisée en ce que**
la soudure (109), vue en direction de rotation du rotor (106), est disposée au milieu de la portion du noyau (107).

3. Pompe à vide selon l'une des revendications précédentes,
**caractérisée en ce que**
au moins une soudure respective (109) est prévue sur le côté extérieur de chaque portion (107b) du noyau (107) qui se situe entre deux aimants permanents respectifs (112) voisins, vus en direction de rotation du rotor (106).

4. Pompe à vide selon l'une des revendications précédentes,
**caractérisée en ce que**
les tôles en acier (107a) de l'empilement sont collées ensemble par cuisson au moyen d'une laque à cuire.

5. Pompe à vide selon l'une des revendications précédentes,
**caractérisée en ce que**
chaque aimant permanent (112) est agencé à l'intérieur du noyau (107) dans un logement (110) qui est refermé de façon étanche aux gaz.

6. Pompe à vide selon la revendication 5,
**caractérisée en ce que**
chaque aimant permanent (112) est agencé dans son propre logement (110).

7. Pompe à vide selon l'une des revendications précédentes,
**caractérisée en ce que**
au moins deux aimants permanents (112) sont agencés l'un à côté de l'autre, vus en direction radiale et/ou en direction axiale et/ou en direction de rotation du rotor (106), dans un logement respectif (110) refermé de façon étanche aux gaz.

8. Pompe à vide selon l'une des revendications précédentes,
**caractérisée en ce que**
les tôles en acier (107a) de l'empilement sont mises en rangée, vues en direction longitudinale de l'axe de rotation (104), et/ou les tôles en acier (107a) sont agencées entre deux tôles frontales, en particulier en fer doux, vues en direction longitudinale de l'axe de rotation (104).

9. Pompe à vide selon l'une des revendications précédentes,
**caractérisée en ce que**
chaque pôle de rotor (108) présente un contour extérieur (114) correspondant à un contour dit redresseur, ou chaque pôle de rotor (108) présente un contour extérieur (114) correspondant à un cercle partiel.

10. Pompe à vide selon l'une des revendications précédentes,
**caractérisée en ce que**
chaque pôle de rotor (108) comprend au moins deux aimants permanents (112), les aimants permanents (112) d'un pôle de rotor respectif (108) étant disposés en forme de V dans une, deux, trois couches ou plus.

11. Pompe à vide selon l'une des revendications précédentes,
**caractérisée en ce que**
chaque brin d'enroulement électrique côté stator est disposé sur le stator à la manière d'un enroulement réparti monocouche ou à la manière d'un enroulement réparti bicouche ou à la manière d'un enroulement à dents.

12. Pompe à vide selon l'une des revendications précédentes,
**caractérisée en ce que**
l'un au moins des aimants permanents (112) et de préférence chacun des aimants permanents (112) est un aimant en ferrite, de préférence un aimant en ferrite magnétique dur et de manière particulièrement préférée un aimant en ferrite de baryum, ou un aimant en terre rare, et/ou l'un au moins des aimants permanents (112) et de préférence chacun des aimants permanents (112) comprend comme matériau magnétique du NdFeB ou SmCo, en particulier du SmCo₅ ou Sm₂Co₁₇, ou est constitué de NdFeB ou de SmCo, en particulier de SmCo₅ ou de Sm₂Co₁₇.

13. Pompe à vide selon l'une des revendications précédentes,
**caractérisée en ce que**
l'un au moins des aimants permanents (112) et de préférence chacun des aimants permanents (112) présente un revêtement qui protège contre la fragilisation et/ou contre la corrosion.

14. Pompe à vide selon l'une des revendications précédentes,
**caractérisée en ce que**
chaque aimant permanent (112) présente une direction de magnétisation (M) et la direction de magnétisation (M) d'au moins un aimant permanent (112) n'est pas parallèle à la direction radiale (R), vue par rapport à l'axe de rotation (104), qui recoupe au moins approximativement le centre de l'aimant permanent (112).

15. Pompe à vide selon la revendication 14,
**caractérisée en ce que**
la direction de magnétisation (M) de l'aimant permanent (112) est disposée sous un angle (α) compris entre 10 degrés et 170 degrés par rapport à la direction radiale respective, ou l'angle (α) est au moins approximativement de 90 degrés.
